# FASCICULE DE BREVET EUROPEEN

(11) **EP 4 620 098 B1**
(45) Date de publication et mention de la délivrance du brevet: **22.07.2026**
(21) Numéro de dépôt: 23804632.0
(22) Date de dépôt: 07.11.2023
(51) Int. Cl.: H02S 50/00

(54) **SYSTÈME COMPORTANT UN PANNEAU PHOTOVOLTAÏQUE POUR L'ALIMENTATION ÉLECTRIQUE D'UNE CHARGE**
SYSTEM MIT EINEM FOTOVOLTAISCHEN PANEEL ZUR STROMVERSORGUNG EINER LAST
SYSTEM COMPRISING A PHOTOVOLTAIC PANEL FOR SUPPLYING ELECTRICAL POWER TO A LOAD

(30) Priorité: 14.11.2022 FR 2211817
(43) Date de publication de la demande: 24.09.2025
(73) Titulaire: Commissariat à l'Energie Atomique et aux Energies Alternatives, 75015 Paris (FR); Renault SAS, 92100 Boulogne Billancourt (FR)
(72) Inventeur: CHAMBION, Bertrand, 38054 Grenoble Cedex 09 (FR); CATELLANI, Stéphane, 38054 Grenoble Cedex 09 (FR); STINEAU, Jean-Yves, 78084 Guyancourt Cedex (FR); RICHARD, Arnaud, 78084 Guyancourt Cedex (FR)
(74) Mandataire: Cabinet Beaumont
(86) Numéro de dépôt international: PCT/EP2023/080993
(87) Numéro de publication internationale: WO 2024/104829

(56) Documents cités:
- JP-A- 2016 158 396
- US-A1- 2020 395 759

## Description

La présente demande est basée sur, et revendique la priorité de la demande de brevet français 2211817 déposée le 14 novembre 2022 et ayant pour titre "Système comportant un panneau photovoltaïque pour l'alimentation électrique d'une charge", qui est considérée comme faisant partie intégrante de la présente description dans les limites prévues par la loi.

### Domaine technique

La présente description concerne de façon générale le domaine des systèmes ou installations à base de panneaux photovoltaïques. Elle vise plus particulièrement un système comportant un panneau photovoltaïque pour l'alimentation électrique d'un ensemble charge et moyen de stockage d'énergie électrique, nécessitant une gestion précise de l'énergie électrique, par exemple un véhicule automobile. Le document JP 2016 158396 A est relevant.

### Technique antérieure

On a proposé un véhicule automobile à motorisation électrique, équipé d'un panneau photovoltaïque, aussi appelé toit solaire, servant de source d'appoint pour la recharge d'une batterie électrique du véhicule, en vue notamment d'augmenter l'autonomie du véhicule.

Il serait souhaitable d'améliorer au moins en partie certains aspects d'un tel véhicule.

Plus généralement, il serait souhaitable d'améliorer au moins en partie certains aspects des systèmes à base de panneaux photovoltaïques.

### Résumé de l'invention

Un mode de réalisation prévoit un système comportant un panneau photovoltaïque, et un convertisseur de puissance adapté à convertir une puissance électrique de sortie du panneau photovoltaïque en une puisse électrique d'alimentation d'une charge, le système comportant en outre un module d'auto-activation configuré pour, avant d'activer le convertisseur de puissance, mettre en oeuvre les étapes successives suivantes :
a) mesurer la puissance électrique maximale pouvant être produite par le panneau photovoltaïque ;
b) comparer ladite puissance électrique maximale à un premier seuil de puissance ; et
c) activer le convertisseur de puissance pour alimenter la charge uniquement si ladite puissance électrique maximale est supérieure audit premier seuil de puissance.

Selon un mode de réalisation, le module d'auto-activaton est configuré pour réitérer périodiquement les étapes a) et b) tant que ladite puissance électrique maximale est inférieure audit premier seuil de puissance.

Selon un mode de réalisation, le premier seuil de puissance est supérieur ou égal à une valeur de surconsommation du système en cas d'activation du convertisseur de puissance pour alimenter la charge.

Selon un mode de réalisation, le module d'auto-activation est configuré pour mesurer la tension aux bornes du panneau photovoltaïque et mettre en oeuvre les étapes a) et b) uniquement lorsque ladite tension est supérieure à un seuil de tension prédéfini

Selon un mode de réalisation, le module d'auto-activation est en outre configuré pour, après l'étape c), mesurer périodiquement la puissance électrique maximale pouvant être produite par le panneau photovoltaïque, et interrompre le convertisseur de puissance lorsque ladite puissance électrique maximale retombe sous un deuxième seuil de puissance.

Selon un mode de réalisation, le deuxième seuil de puissance est inférieur au premier seuil de puissance.

Selon un mode de réalisation, le premier seuil de puissance est modifiable pour prendre l'une ou l'autre de deux valeurs prédéfinies en fonction d'un mode d'utilisation du système.

Selon un mode de réalisation, la charge à alimenter est une batterie d'un véhicule, et le panneau photovoltaïque est monté sur le véhicule.

Selon un mode de réalisation, le module d'auto-activation comprend un circuit de mesure d'une caractéristique courant-tension) du panneau photovoltaïque.

Selon un mode de réalisation, le module d'auto-activation comprend en outre un multiplieur fournissant un signal représentatif du produit du courant et de la tension du panneau photovoltaïque.

Selon un mode de réalisation, le module d'auto-activation comprend en outre un détecteur d'une valeur maximale du signal représentatif du produit du courant et de la tension du panneau photovoltaïque.

Selon un mode de réalisation, le module d'auto-activation comprend en outre un circuit de comparaison de ladite valeur maximale du signal représentatif du produit du courant et de la tension du panneau photovoltaïque à un seuil.

Un autre mode de réalisation prévoit un procédé de commande d'un système comportant un panneau photovoltaïque, et un convertisseur de puissance adapté à convertir une puissance électrique de sortie du panneau photovoltaïque en une puisse électrique d'alimentation d'une charge, comprenant, avant d'activer le convertisseur de puissance, les étapes successives suivantes :
a) mesurer la puissance électrique maximale pouvant être produite par le panneau photovoltaïque ;
b) comparer ladite puissance électrique maximale à un premier seuil de puissance ; et
c) activer le convertisseur de puissance pour alimenter la charge uniquement si ladite puissance électrique maximale est supérieure audit premier seuil de puissance.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente schématiquement, sous forme de blocs, un exemple d'un mode de réalisation d'un système comportant un panneau photovoltaïque adapté à alimenter électriquement une charge ;
la figure 2 est un diagramme illustrant schématiquement un exemple d'un procédé de contrôle mis en oeuvre dans le système de la figure 1 ;
la figure 3 représente plus en détail, sous forme de blocs, un exemple de réalisation d'un module d'auto-activation du système de la figure 1 ;
la figure 4 est un schéma électrique plus détaillé d'un exemple de réalisation d'une partie du module d'auto-activation de la figure 3 ;
la figure 5 est un schéma électrique plus détaillé d'un exemple de réalisation d'une autre partie du module d'auto-activation de la figure 3 ; et
la figure 6 est un schéma électrique plus détaillé d'un exemple de réalisation d'encore une autre partie du module d'auto-activation de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, seule la réalisation d'un module d'auto-activation configuré pour déclencher l'alimentation d'une charge électrique par un panneau photovoltaïque, conditionnée à une puissance instantanée maximale productible par le panneau photovoltaïque, a été détaillée. Les autres éléments du système n'ont pas été détaillés, les modes de réalisation décrits étant compatibles avec tous ou la plupart des systèmes connus à base de panneaux photovoltaïques, moyennant d'éventuelles adaptations à la portée de la personne du métier à partir des indications de la présente description.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Sauf précision contraire, les expressions "environ", "approximativement", "sensiblement", et "de l'ordre de" signifient à 10 % près, de préférence à 5 % près.

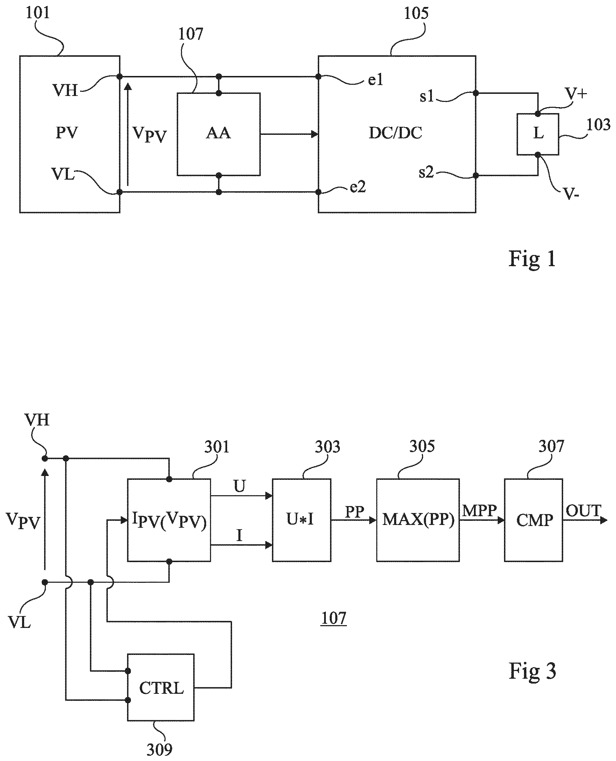

La figure 1 représente schématiquement, sous forme de blocs, un exemple d'un mode de réalisation d'un système comportant un panneau photovoltaïque 101 (PV) adapté à alimenter électriquement une charge 103 (L). Le système est par exemple un véhicule automobile, par exemple à motorisation électrique. Le panneau photovoltaïque 101 est par exemple installé sur le toit du véhicule. La charge 103 est par exemple une batterie électrique, par exemple la batterie de traction du véhicule, alimentant un moteur électrique de traction du véhicule, ou une batterie auxiliaire du véhicule.

Le système de la figure 1 comprend un convertisseur de puissance 105, par exemple un convertisseur à découpage, par exemple de type continu/continu (DC), adapté à convertir une puissance électrique de sortie du panneau photovoltaïque 101 en une puissance électrique d'alimentation de la charge 103. Dans l'exemple représenté, le convertisseur 105 comprend des bornes d'entrée e1 et e2 reliées, par exemple connectées, respectivement à des bornes de sortie VH et VL du panneau photovoltaïque 101. Les bornes VH et VL correspondent respectivement aux bornes de fourniture de puissance de potentiel haut et de potentiel bas du panneau photovoltaïque. Le convertisseur 105 comprend en outre deux bornes de sortie s1 et s2 reliées, par exemple connectées, respectivement à des bornes V+ et V- d'alimentation de la charge 103. Dans le cas où la charge 103 est une batterie électrique, les bornes V+ et V- correspondent par exemple respectivement à une borne positive et à une borne négative de la batterie. La réalisation du convertisseur de puissance 105 n'a pas été détaillée, les modes de réalisation décrits étant compatibles avec toutes ou la plupart des architectures connues de convertisseurs de puissance. A titre d'exemple, le convertisseur 105 comprend une pluralité d'interrupteurs de puissance (non détaillés sur la figure) commandés en commutation par l'intermédiaire d'un microcontrôleur (non détaillé sur la figure).

En pratique, dans un véhicule automobile, et en particulier lorsque la charge 103 correspond à la batterie de traction du véhicule, l'activation du convertisseur de puissance 105 pour alimenter la charge 103 à partir de l'énergie électrique produite par le panneau photovoltaïque 101 requiert l'activation de divers périphériques du véhicule, pour mettre en oeuvre, par exemple, des fonctions de surveillance des niveaux de charge des cellules de la batterie, des fonctions de surveillance de température au sein de la batterie, des fonctions de refroidissement, etc. La surconsommation électrique induite du fait de l'activation de ces périphériques, c'est à dire la consommation additionnelle liée à l'utilisation du panneau photovoltaïque (nulle lorsque le panneau n'est pas utilisé), peut être non négligeable. Par exemple, si le véhicule est à l'arrêt et en veille (mode parking), l'activation des périphériques nécessaires au bon déroulement de la recharge solaire peut induire une surconsommation comprise entre 5 et 50 W, par exemple de l'ordre de 20 à 30 W. Si le véhicule est en déplacement (mode roulage), certains des périphériques nécessaires au bon déroulement de la recharge solaire sont déjà actifs. Ainsi, la surconsommation liée à l'activation de la recharge solaire est plus faible. Cette surconsommation reste toutefois non négligeable, par exemple comprise entre 2 et 10 W, par exemple de l'ordre de 5 à 7 W.

Si la puissance électrique produite par le panneau photovoltaïque est inférieure à la surconsommation liée à l'activation de la recharge solaire, le bilan global de la recharge solaire est négatif. Il est alors préférable d'interrompre la recharge solaire. Si en revanche la puissance électrique produite par le panneau photovoltaïque est supérieure à la surconsommation liée à l'activation de la recharge solaire, le bilan global de la recharge solaire est positif. Il est alors souhaitable de poursuivre la recharge solaire.

La puissance électrique produite par le panneau photovoltaïque est susceptible de varier au cours du temps, en fonction notamment de l'ensoleillement.

Pour déterminer si le bilan de la recharge solaire est positif ou négatif, une possibilité consiste à activer la recharge solaire, à mesurer la puissance fournie à la charge 103 en sortie du convertisseur 105, et à comparer cette puissance à un seuil prédéfini de surconsommation lié à l'activation de la recharge solaire. Si la puissance fournie en sortie du convertisseur 105 est supérieure au seuil de surconsommation, le bilan est positif et la recharge solaire peut être poursuivie. Si en revanche la puissance fournie en sortie du convertisseur 105 est inférieure au seuil de surconsommation, le bilan est négatif et la recharge solaire est interrompue pendant un intervalle de temps prédéfini, à l'issue duquel une nouvelle tentative de recharge solaire est mise en oeuvre.

Une limitation de cette approche est qu'elle implique d'activer régulièrement la recharge solaire, sans savoir à l'avance si le bilan sera positif ou non, conduisant à un phénomène de pompage pouvant décharger prématurément la batterie si le véhicule reste pendant une longue période dans des conditions de faible ensoleillement.

Selon un aspect des modes de réalisation décrits, le système de la figure 1 comprend un module d'auto-activation 107 (AA) configuré pour, avant d'activer le convertisseur de puissance 105 pour alimenter la charge, mesurer la puissance électrique maximale pouvant être produite par le panneau photovoltaïque 101, comparer cette puissance à un seuil prédéfini de surconsommation liée à l'activation de la recharge solaire, et activer le convertisseur de puissance pour alimenter la charge uniquement si la puissance électrique maximale productible par le panneau photovoltaïque est supérieure au seuil de surconsommation.

Autrement dit, la recharge solaire est activée uniquement si la puissance électrique maximale productible mesurée par le module 107 est supérieure au seuil de surconsommation, ce qui permet d'éviter les phénomènes de pompage mentionnés ci-dessus.

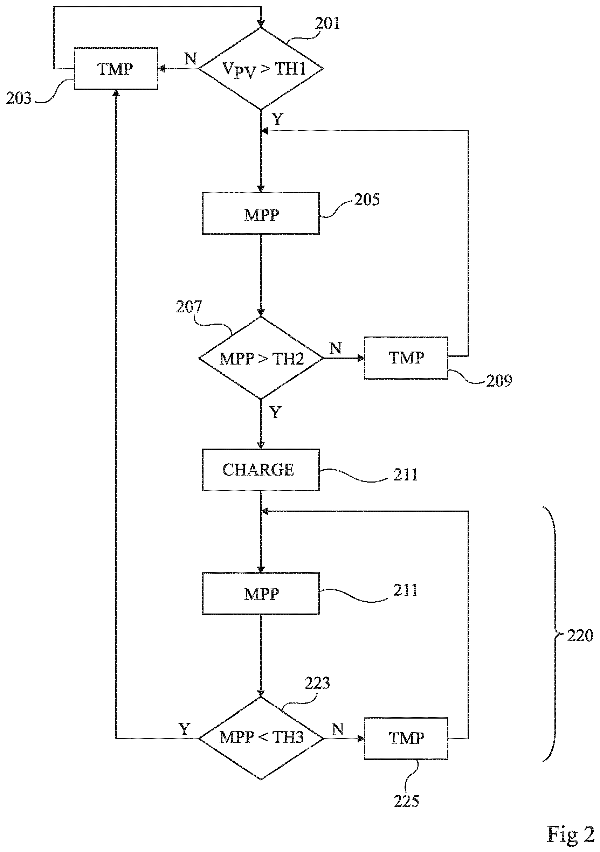

La figure 2 est un diagramme illustrant schématiquement un exemple d'un procédé de contrôle mis en oeuvre par le module d'auto-activation 107 du système de la figure 1.

Initialement, la recharge solaire est inactive, c'est à dire que le convertisseur de puissance 105 est inactif et le panneau photovoltaïque 101 est maintenu en circuit ouvert.

Lors d'une étape 201, le module 107 compare la tension de sortie V_{PV} du panneau photovoltaïque à un seuil TH1 correspondant à un seuil de tension minimal pour permettre l'auto-alimentation du module 107, par exemple un seuil compris entre 10 et 20 V, par exemple de l'ordre de 18 V.

Si la tension V_{PV} est inférieure au seuil TH1 (N), une temporisation 203 (TMP) est déclenchée, puis l'étape 201 est réitérée après un intervalle de temps prédéfini, par exemple supérieur à 1 seconde, par exemple de plusieurs secondes. A titre d'exemple, les étapes 201 et 203 peuvent être implémentées au moyen d'un microcontrôleur (non détaillé sur les figures) alimenté par un circuit d'auto-alimentation relié, par exemple connecté, aux bornes de sortie VH et VL du panneau photovoltaïque, adapté à fonctionner sous une tension inférieure au seuil TH1, par exemple une tension de quelques volts, par exemple une tension de l'ordre de 3,3 V.

Si la tension V_{PV} est supérieure au seuil TH1 (Y), une étape 205 de mesure de la puissance maximale MPP productible par le panneau photovoltaïque est mise en oeuvre. La puissance MPP correspond à la puissance maximale pouvant être produite dans les conditions d'irradiations du panneau au moment de la mesure.

Lors de l'étape 205, on fait varier la tension V_{PV} du panneau photovoltaïque entre une valeur minimale correspondant à la tension de court-circuit du panneau et une valeur maximale correspondant à la tension de circuit ouvert du panneau, en recherchant le point de puissance maximale du panneau, c'est à dire le point de fonctionnement pour lequel le produit V_{PV}*I_{PV} est maximal, I_{PV} désignant le courant fourni par le panneau photovoltaïque. La puissance maximale productible MPP correspond au produit V_{PV}*I_{PV} à ce point de fonctionnement.

A l'issue de l'étape 205, une étape 207 de comparaison de la valeur MPP mesurée à l'étape 205, à un seuil prédéterminé TH2, est mise en oeuvre. Le seuil TH2 correspond par exemple au seuil de surconsommation lié à l'activation de la recharge solaire, en dessous duquel il n'est pas intéressant d'activer le convertisseur de puissance 105. Le seuil TH2 peut être modifié en fonction du mode d'utilisation du véhicule. A titre d'exemple, le seuil TH2 peut avoir une première valeur, par exemple comprise entre 5 et 50 W, par exemple de l'ordre de 20 à 30 W, lorsque le véhicule est à l'arrêt (mode parking), et une deuxième valeur inférieure à la première valeur, par exemple comprise entre 2 et 10 W, par exemple de l'ordre de 5 à 7 W, lorsque le véhicule est en déplacement (mode roulage).

Si la valeur MPP est inférieure au seuil TH2 (N), une temporisation 209 (TMP) est déclenchée, puis les étapes 205 et 207 sont réitérées après un intervalle de temps prédéfini, par exemple supérieur à 1 ms, par exemple compris entre 1 milliseconde et 5 minutes, par exemple de l'ordre de 100 millisecondes.

Si la valeur MPP est supérieure au seuil TH2 (Y), le convertisseur de puissance 105 est activé lors d'une étape 211 (CHARGE), de façon à alimenter la charge 103 à partir de l'énergie électrique produite par le panneau photovoltaïque 101. Autrement dit, dans cet exemple, la charge solaire est activée à l'étape 211.

Après l'étape 211, une boucle de surveillance 220 peut optionnellement être mise en oeuvre par le module 107, pour interrompre la recharge solaire si la puissance électrique maximale productible par le panneau photovoltaïque retombe sous un seuil TH3, par exemple inférieur ou égal au seuil TH2, de préférence strictement inférieur au seuil TH2 de manière à obtenir un hystérésis.

La boucle 220 comprend, après l'étape 211, une nouvelle étape 221 (MPP) de mesure de la puissance maximale MPP productible par le panneau photovoltaïque. L'étape 221 est par exemple mise en oeuvre par le module 107 de façon identique ou similaire à l'étape 205.

La boucle 220 comprend en outre, après l'étape 221, une étape 223 de comparaison de la valeur MPP mesurée à l'étape 221 au seuil TH3, aussi appelé seuil de désactivation. De même que le seuil TH2, le seuil TH3 peut être modifié en fonction du mode d'utilisation du véhicule.

Si la valeur MPP est supérieure au seuil TH3 (N), une temporisation 225 (TMP) est déclenchée, puis les étapes 221 et 223 sont réitérées après un intervalle de temps prédéfini, par exemple supérieur à 10 ms, par exemple compris entre 10 ms et 1 minute, par exemple entre 100 millisecondes et 1 seconde.

Si la valeur MPP est inférieure au seuil TH3 (Y), la charge solaire est désactivée, en particulier le convertisseur de puissance 105 désactivé, puis la temporisation 203 est déclenchée et le processus reprend à l'étape 201.

A titre de variante, la boucle de surveillance 220 peut être omise. Dans ce cas, d'autres circuits de surveillance de la puissance produite par le panneau photovoltaïque, distincts du module d'auto-activation 107, par exemple des circuits basés sur des mesures de puissance en sortie du convertisseur de puissance 105, peuvent être utilisés pour décider ou non d'interrompre la recharge solaire.

La figure 3 représente plus en détail, sous forme de blocs, un exemple de réalisation analogique du module d'auto-activation 107 du système de la figure 1.

Dans cet exemple, le module 107 comprend un circuit 301 de mesure de la caractéristique I_{PV}(V_{PV}) du panneau photovoltaïque. Dans cet exemple, le circuit 301 est relié, par exemple connecté, aux bornes de sortie VH et VL du panneau photovoltaïque 101. Lors d'une phase de mesure, le circuit 301 est adapté à faire varier, par exemple de façon continue, la valeur de la tension V_{PV} entre une valeur minimale, correspondant à la tension de court-circuit du panneau, et une valeur maximale, correspondant à la tension de circuit ouvert du panneau. Tout au long de la mesure, le circuit 301 fournit un signal U représentatif de la tension V_{PV} aux bornes du panneau photovoltaïque 101, par exemple proportionnel à la tension V_{PV}, et un signal I représentatif du courant I_{PV} fourni par le module photovoltaïque 101, par exemple proportionnel à la tension I_{PV}.

Le module 107 de la figure 3 comprend en outre un multiplieur analogique recevant en entrée les signaux U et I et fournissant en sortie un signal PP égal ou proportionnel au produit U*I, représentatif de la puissance instantanée productible par le panneau photovoltaïque au point de fonctionnement (V_{PV}, I_{PV}) considéré.

Le module 107 de la figure 3 comprend en outre un circuit 305 de détection de la valeur maximale MPP du signal PP pendant la phase de mesure. La valeur MPP est représentative de la puissance instantanée maximale productible par le panneau photovoltaïque.

Le module 107 de la figure 3 comprend en outre un circuit 307 de comparaison de la valeur MPP à un seuil prédéterminé, correspondant au seuil TH2 de l'algorithme de la figure 2. Le circuit 307 fournit un signal OUT, par exemple un signal binaire, représentatif du résultat de la comparaison. Le signal OUT peut être transmis à un microcontrôleur, non représenté, pour activer ou non, en fonction du résultat de la comparaison, le convertisseur de puissance 105 du système.

Le module 107 de la figure 3 comprend en outre un circuit de contrôle 309 relié, par exemple connecté, aux bornes VH et VL du panneau photovoltaïque, adapté à déclencher la mesure de la caractéristique I_{PV}(V_{PV}) par le circuit 301, notamment lorsque la tension V_{PV} aux bornes du panneau photovoltaïque 101 dépasse un seuil, par exemple le seuil TH1 de l'algorithme de la figure 2, puis à intervalle régulier tant que la tension V_{PV} reste supérieure au seuil TH1.

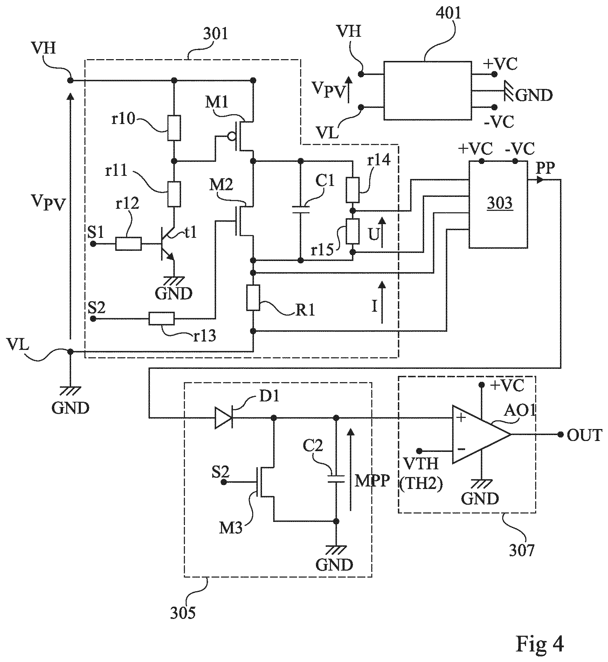

La figure 4 est un schéma électrique plus détaillé d'un exemple de réalisation d'une partie du module d'auto-activation 107 de la figure 3.

La figure 4 illustre plus particulièrement un exemple de réalisation des circuits 301, 303, 305 et 307 du module 107. La figure 4 représente en outre un circuit d'auto-alimentation 401 (non visible sur la figure 3) du module 107.

Le circuit 401 est relié, par exemple connecté, aux bornes de sortie VH et VL du panneau photovoltaïque 101, et est adapté à fournir une tension d'alimentation continue au module 107 lorsque la tension V_{PV} aux bornes du panneau photovoltaïque 101 dépasse un seuil, par exemple égal au seuil TH1. A titre d'exemple, le circuit 401 est adapté à fournir une tension d'alimentation positive +VC, par exemple de l'ordre de +12V, et une tension d'alimentation négative symétrique -VC, par exemple de l'ordre de -12V, lorsque la tension V_{PV} dépasse un seuil, par exemple supérieur à +VC. Les tensions d'alimentation continues +VC et -VC du module sont par exemple référencées par rapport à une même borne de référence GND du module, par exemple connectée à la masse. Le circuit 401 comprend par exemple un convertisseur à découpage de type continu-continu.

Dans l'exemple de la figure 4, le circuit 301 comprend un condensateur C1 en série avec une résistance R1. Lors d'une phase de mesure de la caractéristique I_{PV}(V_{PV}), l'association en série du condensateur C1 et de la résistance R1 est reliée aux bornes du panneau photovoltaïque 101, entrainant la charge du condensateur C1. En début de charge (condensateur C1 entièrement déchargé), le courant I_{PV} délivré par le panneau photovoltaïque correspond au courant de court-circuit du panneau. En fin de charge (condensateur C1 entièrement chargé), le courant I_{PV} s'annule et la tension V_{PV} aux bornes du panneau photovoltaïque correspond à la tension de circuit ouvert du panneau. Dans cet exemple, le signal de sortie U du circuit 301 est une tension représentative de la tension aux bornes du condensateur C1 (et donc de la tension V_{PV} du panneau photovoltaïque, et le signal de sortie I du circuit 301 est une tension représentative de la tension aux bornes de la résistance R1 (et donc du courant I_{PV} délivré par le panneau photovoltaïque).

Dans cet exemple, la résistance R1 a une première extrémité reliée, par exemple connectée, à la borne VL, et une deuxième extrémité reliée, par exemple connectée, à une première électrode du condensateur C1. La deuxième électrode du condensateur C1 est reliée à la borne VH par l'intermédiaire d'un interrupteur M1 de déclenchement de la mesure. L'interrupteur M1 est par exemple un transistor MOS. Dans l'exemple représenté, l'interrupteur M1 est un transistor MOS à canal P. L'interrupteur M1 à un premier noeud de conduction (drain) relié, par exemple connecté, à la deuxième électrode du condensateur C1 et un deuxième noeud de conduction (source) relié, par exemple connecté, à la borne VH.

Dans l'exemple de la figure 4, le circuit 301 comprend en outre, en parallèle du condensateur C1, un interrupteur M2 de réinitialisation du condensateur C1. L'interrupteur M2 est par exemple un transistor MOS. Dans l'exemple représenté, l'interrupteur M2 est un transistor MOS à canal N. L'interrupteur M2 à un premier noeud de conduction (source ou drain) relié, par exemple connecté, à la première électrode du condensateur C1 et un deuxième noeud de conduction (drain ou source) relié, par exemple connecté, à la deuxième électrode du condensateur C1.

L'interrupteur M1 a un noeud de commande (noeud de grille dans l'exemple représenté) relié à un noeud d'application d'un signal de commande S1. Dans cet exemple, le noeud de commande de l'interrupteur M1 est relié au noeud de commande S1 par l'intermédiaire d'un circuit de commande rapprochée comprenant trois résistances r10, r11 et r12, et un transistor t1. Les résistances r10 et r11 et le transistor t1 sont connectés en série, dans cet ordre, entre la borne VH et le noeud de référence GND. Le transistor t1 est par exemple un transistor bipolaire de type NPN dont le collecteur est relié, par exemple connecté, à l'extrémité de la résistance r11 opposée à la résistance r10, et dont l'émetteur est relié, par exemple connecté, au noeud GND. Le transistor t1 a un noeud de contrôle, par exemple un noeud de base, relié au noeud S1 par l'intermédiaire de la résistance r12. Dans cet exemple, le point milieu entre les résistances r10 et r11 est relié, par exemple connecté, au noeud de commande de l'interrupteur M1.

L'interrupteur M2 a un noeud de commande (noeud de grille dans l'exemple représenté) relié à un noeud d'application d'un signal de commande S2. Dans cet exemple, le noeud de commande de l'interrupteur M2 est relié au noeud de commande S2 par l'intermédiaire d'une résistance r13.

Dans l'exemple de la figure 4, le signal de sortie I du circuit 301 est directement la tension aux bornes de la résistance R1. Le signal de sortie U du circuit 301 est quant à lui une tension proportionnelle à la tension aux bornes du condensateur C1. Plus particulièrement, dans cet exemple, le circuit 301 comprend deux résistances r14 et 15 connectée en série aux bornes du condensateur C1 et formant un pont diviseur de tension. Le signal U correspond à la tension aux bornes de la résistance r15, connectée à l'électrode basse du condensateur C1, c'est à dire l'électrode du condensateur C1 connectée à la résistance R1.

Dans l'exemple de la figure 4, le circuit 303 est un multiplieur analogique recevant en entrée les tensions U et I et fournissant en sortie une tension PP égale ou proportionnelle au produit U*I. Le circuit 303 est par exemple alimenté par les tensions +VC et -VC fournies par le circuit 401. La tension de sortie PP du circuit 303 est par exemple référencée par rapport au noeud de référence GND.

Dans cet exemple, le circuit 305 de détection de la valeur maximale MPP du signal PP comprend une diode D1, par exemple une diode Schottky, et un condensateur C2. L'anode de la diode D1 est reliée, par exemple connectée, au noeud de sortie du multiplieur 303, fournissant en sortie la tension PP. La cathode de la diode D1 est reliée, par exemple connectée, à une première électrode du condensateur C2. La deuxième électrode du condensateur C2 est reliée, par exemple connectée, au noeud de référence GND. Le condensateur C2 conserve momentanément, grâce à la diode D1, la valeur maximale du signal PP à chaque mesure. Ainsi, le signal MPP correspond à la tension aux bornes du condensateur C2 à la fin de la mesure. Dans l'exemple représenté, le circuit 305 comprend en outre un interrupteur de réinitialisation M3, par exemple un transistor MOS, connecté en parallèle du condensateur C2. Le transistor M3 est par exemple un transistor MOS à canal N. Dans cet exemple, le transistor M3 a un premier noeud de conduction (source) relié, par exemple connecté, à la première électrode du condensateur C2 et un deuxième noeud de conduction (drain) relié, par exemple connecté, à la deuxième électrode du condensateur C2. L'interrupteur M3 a un noeud de commande (noeud de grille dans l'exemple représenté) relié, par exemple connecté, à un noeud d'application d'un signal de commande, par exemple le même signal de commande S2 que celui utilisé pour commander l'interrupteur de réinitialisation M2.

Dans l'exemple de la figure 4, le circuit de comparaison 307 comprend un amplificateur opérationnel AO1 dont une entrée non inverseuse (+) est reliée, par exemple connectée, au noeud de sortie du circuit 305, c'est à dire à la première électrode du condensateur C2 (côté diode D1 dans l'exemple représenté), et dont une entrée inverseuse (-) est reliée, par exemple connectée, à un noeud d'application d'une tension continue VTH définissant le seuil de comparaison du circuit. La sortie de l'amplificateur opérationnel AO1 est reliée, par exemple connectée, au noeud de sortie OUT du module 107. Le signal de sortie de l'amplificateur opérationnel A01 est par exemple un signal binaire, par exemple une tension présentant un premier état, par exemple de niveau bas, lorsque la tension MPP est inférieure au seuil VTH (correspondant par exemple au seuil TH2 de l'algorithme de la figure 2), et un deuxième état, par exemple de niveau haut, lorsque la tension MPP est supérieure au seuil VTH. A titre d'exemple, l'amplificateur opérationnel AO1 est alimenté par la tension d'alimentation continue +VC fournie par le circuit 401.

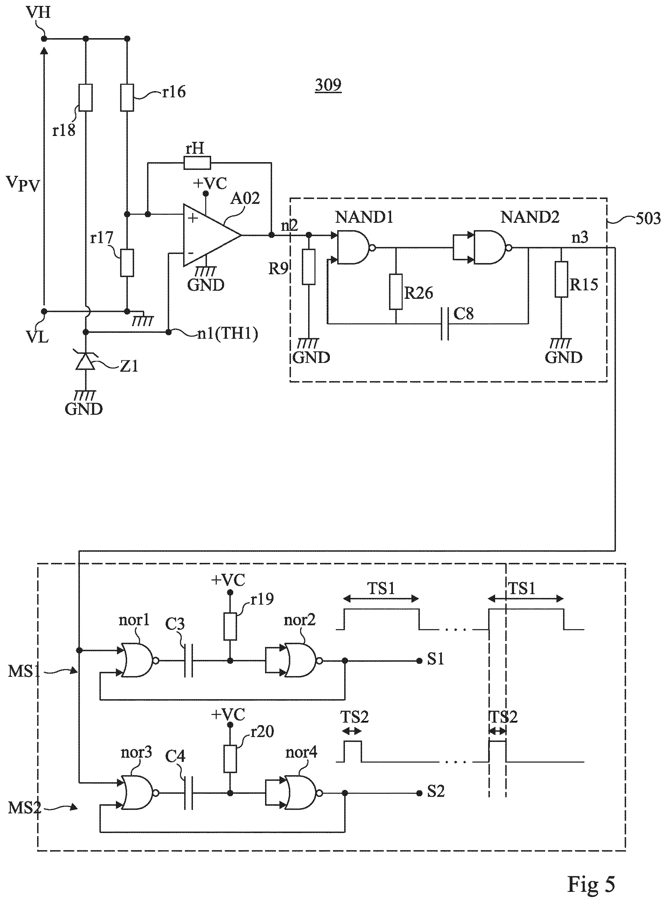

La figure 5 est un schéma électrique plus détaillé d'un exemple de réalisation d'une autre partie du module d'auto-activation 107 de la figure 3.

La figure 5 illustre plus particulièrement un exemple de réalisation du circuit de contrôle 309 du module d'auto-activation 107.

Comme expliqué précédemment, le circuit 309 est adapté à déclencher la mesure de la caractéristique I_{PV}(V_{PV}) par le circuit 301, c'est à dire, dans l'exemple de la figure 4, à déclencher la charge du condensateur C1, lorsque la tension V_{PV} aux bornes du panneau photovoltaïque 101 dépasse un seuil, par exemple le seuil TH1 de l'algorithme de la figure 2, puis à intervalle régulier tant que la tension V_{PV} reste supérieure au seuil TH1.

Le circuit 309 de la figure 5 comprend deux résistances r16 et r17 en série entre les bornes VH et VL du panneau photovoltaïque 101, formant un pont diviseur de tension. Plus particulièrement, dans cet exemple, la résistance r16 a une première extrémité reliée, par exemple connectée, à la borne VH, et une deuxième extrémité reliée, par exemple connectée, à une première extrémité de la résistance r17. La deuxième extrémité de la résistance r17 est reliée, par exemple connectée, à la borne VL.

Le circuit 309 comprend en outre un amplificateur opérationnel AO2 monté en comparateur de tension dont une entrée non inverseuse (+) est reliée, par exemple connectée, au point milieu entre les résistances r16 et r17. L'amplificateur opérationnel AO2 a en outre une entrée inverseuse (-) reliée, par exemple connectée, à un noeud n1 d'application d'une tension de référence définissant le seuil de comparaison TH1 du comparateur. Dans cet exemple, la tension de référence appliquée sur le noeud n1 est générée au moyen d'une diode Zener Z1. L'anode de la diode Zener Z1 est reliée, par exemple connectée, au noeud GND, et la cathode de la diode Zener n1 est reliée à la borne de sortie de potentiel haut VH du panneau photovoltaïque 101 par l'intermédiaire d'une résistance r18. Plus particulièrement, dans cet exemple, la résistance r18 a une première extrémité reliée, par exemple connectée, au noeud VH, et une deuxième extrémité reliée, par exemple connectée, à la cathode de la diode Zener Z1. Dans cet exemple, la cathode de la diode Zener Z1 est reliée, par exemple connectée, au noeud n1. Ainsi, dans cet exemple, le seuil TH1 de déclenchement de la mesure de puissance productible maximale MPP du panneau photovoltaïque est fixé par la tension d'avalanche de la diode Zener Z1. Une résistance rH est de préférence prévue entre l'entrée non inverseuse (+) et la sortie de l'amplificateur opérationnel AO2 pour obtenir un fonctionnement à hystérésis. Dans l'exemple représenté, la résistance rH a une première extrémité reliée, par exemple connectée, à la borne d'entrée non inverseuse (+) de l'amplificateur opérationnel AO2, et une deuxième extrémité reliée, par exemple connectée, à la borne de sortie de l'amplificateur opérationnel AO2.

La sortie de l'amplificateur opérationnel AO2 est reliée, par exemple connectée, à un noeud n2. Le signal de sortie de l'amplificateur opérationnel A02 est par exemple un signal binaire, par exemple une tension présentant un premier état, par exemple de niveau bas, lorsque la tension V_{PV} aux bornes du panneau photovoltaïque 101 est inférieure au seuil TH1, et un deuxième état, par exemple de niveau haut, lorsque la tension V_{PV} est supérieure au seuil TH1. A titre d'exemple, l'amplificateur opérationnel AO2 est alimenté par la tension d'alimentation continue +VC fournie par le circuit 401.

Le noeud de sortie n2 de l'amplificateur opérationnel A02 est relié à un noeud d'entrée n3 d'un circuit 501 de génération du signal S1 de commande de l'interrupteur M1 et du signal S2 de commande des interrupteurs M2 et M3. Dans cet exemple, le noeud n2 est relié au noeud n3 par l'intermédiaire d'un circuit 503. Le circuit 503 comprend deux portes logiques NON ET NAND1 et NAND2 reliées en série, une résistance R26 et un condensateur C8, définissant un multivibrateur astable.

La porte NAND1 a un premier noeud d'entrée relié, par exemple connecté, au noeud n2, et un noeud de sortie relié, par exemple connecté, à des premier et deuxième noeuds d'entrée de la porte NAND2. La résistance R26 a une première extrémité reliée, par exemple connectée, au noeud de sortie de la porte NAND1 et une deuxième extrémité reliée, par exemple connectée, à un deuxième noeud d'entrée de la porte NAND1. Le condensateur C8 a une première électrode reliée, par exemple connectée, à la deuxième extrémité de la résistance R26 et une deuxième électrode reliée, par exemple connectée, à un noeud de sortie de la porte NAND2. Le noeud de sortie de la porte NAND2 est relié, par exemple connecté, au noeud n3..

Dans l'exemple représenté, le circuit 503 comprend en outre deux résistances R9 et R15. La résistance R9 a une première extrémité reliée, par exemple connectée au noeud n2 et une deuxième extrémité reliée, par exemple connectée à la masse (GND). La résistance R15 a une première extrémité reliée, par exemple connectée au noeud n3 et une deuxième extrémité reliée, par exemple connectée à la masse (GND).

Le circuit 501 comprend, dans cet exemple, deux circuits monostables MS1 et MS2 générant respectivement les signaux S1 et S2.

Dans cet exemple, le circuit MS1 comprend deux portes logiques NON OU nor1 et nor2, par exemple identiques ou similaires, présentant chacune deux entrées et une sortie. Le circuit MS1 comprend en outre un condensateur C3 et une résistance r19.

La porte logique nor1 a une première entrée reliée, par exemple connectée, au noeud n3.

Le condensateur C3 a une première électrode reliée, par exemple connectée, à un noeud de sortie de la porte logique nor1, et une deuxième électrode reliée, par exemple connectée, aux première et deuxième entrées de la porte logique nor2. Autrement dit, dans cet exemple, les deux entrées de la porte logique nor2 sont court-circuitées et connectées à la deuxième électrode du condensateur C3.

La sortie de la porte logique nor2 est reliée, par exemple connectée, à un noeud de fourniture du signal de commande S1. La sortie de la porte logique nor2 est en outre reliée, par exemple connectée, à la deuxième entrée de la porte logique nor1.

La résistance r19 a une première extrémité reliée, par exemple connectée, à la deuxième électrode du condensateur C3 (côté porte logique nor2), et une deuxième extrémité reliée, par exemple connectée, à un noeud d'application de la tension d'alimentation +VC fournie par le circuit d'alimentation 401.

Dans cet exemple, le circuit MS2 est similaire au circuit MS1, en remplaçant les portes logiques NON OU nor1 et nor2 par des portes logiques NON OU nor3 et nor4, par exemple identiques respectivement aux portes logique nor1 et nor2, et en remplaçant le condensateur C3 et la résistance r19 par respectivement un condensateur c4 et une résistance r20. La sortie de la porte logique nor4 est reliée, par exemple connectée, à un noeud de fourniture du signal de commande S2.

Lorsque le signal de sortie du comparateur A02 (noeud n2) passe à l'état haut, le signal S1 de sortie du circuit MS1 et le signal S2 de sortie du circuit MS2 passent à l'état haut. Le signal S1 reste à un état haut pendant une durée TS1 fixée par la constante de temps du circuit RC formé par la résistance r19 et le condensateur C3. Le signal S2 reste à un état haut pendant une durée TS2 fixée par la constante de temps du circuit RC formé par la résistance r20 et le condensateur C4. La durée TS2 définit le temps de fermeture des interrupteurs de réinitialisation M2 et M3 en début de mesure. La durée TS1, supérieure à la durée TS2, définit le temps de fermeture de l'interrupteur M1. La durée TS1-TS2 correspond au temps de charge du condensateur C1, à l'issue duquel la valeur MPP est extraite.

A titre d'exemple, la durée TS1 est comprise entre 5 et 50 fois la durée TS2, par exemple de l'ordre de 20 fois la durée TS2. A titre d'exemple, la durée TS2 est de quelques dizaines de microsecondes, par exemple de l'ordre de 40 microsecondes, et la durée TS1 est de quelques centaines de microsecondes, par exemple de l'ordre de 800 microsecondes.

Dans l'exemple de la figure 5, le circuit 503 est configuré pour redéclencher périodiquement la mesure de la caractéristique I_{PV}(V_{PV}) et l'extraction de la valeur MPP, tant que la tension V_{PV} aux bornes du panneau photovoltaïque reste supérieure au seuil TH1. Le circuit 503 comprend, pour cela un circuit multivibrateur astable à portes NON ET dont la période de fonctionnement détermine le temps de récurrence des tracés des courbes I(V), par exemple de l'ordre de 1 seconde. La constante de temps du mutivibrateur est dans l'exemple représenté égale à 2,2*R26*C8. Ce multivibrateur est par exemple formé de 2 portes NAND disposées en série dont la deuxième porte est câblée en porte inverseuse et la première a un noeud d'entrée relié au nœud n2. Cette disposition permet le contrôle à l'état ON ou OFF du multivibrateur suivant l'état de sortie de l'amplificateur opérationnel AO2 au noeud n2. Si l'état logique du nœud n2 est à 1 le multivibrateur est ON et si l'état logique du nœud n2 est à 0 le multivibrateur est OFF. Ainsi la mesure est redéclenchée tant que la sortie de l'amplificateur opérationnel AO2 est au niveau logique haut.

Les résistances R9 et R15 ont par exemple une valeur élevée, par exemple de l'ordre de 100 kohms. Ces résistances permettent de ne pas laisser des états électriques flottants à tout moment sur l'entrée logique de commande du multivibrateur à portes NAND et sur les entrées logiques des deux monostables à portes NOR, ces entrées étant à haute impédance, par exemple dans le cas d'une réalisation en technologique CMOS.

A titre d'exemple, le circuit à portes NAND peut être un circuit adapté à être alimenté sous une tension comprise entre 3 volts et 18 volts, par exemple un circuit du type commercialisé par la société Texas Instrument sous la référence CD4011. Ce circuit est par exemple alimenté par la tension d'alimentation continue +VC fournie par le circuit 401.

Comme indiqué précédemment, lorsque le signal de sortie du comparateur AO2 (noeud n2) passe à l'état haut, le signal S1 de sortie du circuit MS1 et le signal S2 de sortie du circuit MS2 passent à l'état haut. Le signal S1 reste à un état haut pendant une durée TS1 fixée par la constante de temps du circuit RC formé par la résistance r19 et le condensateur C3. Le signal S2 reste à un état haut pendant une durée TS2 fixée par la constante de temps du circuit RC formé par la résistance r20 et le condensateur C4.

Pendant toute la durée TS1 de la mesure, l'état logique du nœud n3 est à 1, la constante de temps du multivibrateur formé par le circuit 503 étant très supérieure à la durée TS1 et le rapport cyclique du multivibrateur du circuit 503 étant de 50% environ. Au bout d'un temps fixé par le choix des valeurs de la résistance R26 et de la capacité C8, le multivibrateur reprend un nouveau cycle et présente à nouveau un front montant aux noeuds MS1 et MS2. Ceci conduit à redéclencher les circuits monostables MS1 et MS2 pour générer les impulsions de niveau haut de durées respectives TS1 et TS2 des signaux de commande S1 et S2.

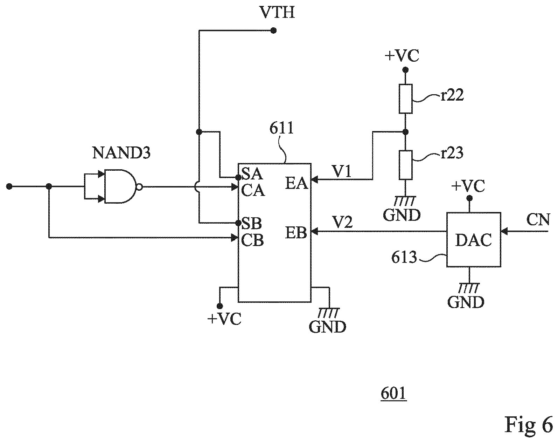

La figure 6 est un schéma électrique plus détaillé d'un exemple de réalisation d'encore une autre partie du module d'auto-activation 107 de la figure 3.

La figure 6 illustre plus particulièrement un exemple de réalisation d'un circuit 601 adapté à générer le seuil de comparaison du circuit de comparaison 307, c'est à dire, dans l'exemple de la figure 4, la tension VTH appliquée sur l'entrée inverseuse (-) de l'amplificateur opérationnel AO1 du circuit de comparaison 307.

Dans l'exemple de la figure 6, le circuit 601 permet d'adapter le seuil VTH, par exemple de façon à ajuster le seuil TH2 ou TH3 selon le mode de fonctionnement du véhicule tel que décrit ci-avant en relation avec la figure 2.

Dans cet exemple, le circuit 601 comprend un commutateur analogique ou multiplexeur 611, comprenant deux noeuds d'entrée EA et EB, deux noeuds de sortie SA et SB, et deux noeuds de contrôle cA et cB. Le commutateur 611 est par exemple alimenté par la tension d'alimentation continue +VC fournie par le circuit 401.

Un pont diviseur de tension constitué d'une association en série de deux résistances r22 et r23 permet de générer une première tension continue V1 appliquée sur l'entrée EA du commutateur 611. Dans cet exemple, la résistance r22 a une première extrémité reliée, par exemple connectée, à un noeud d'application de la tension d'alimentation continue +VC fournie par le circuit d'alimentation 401, et une deuxième extrémité reliée, par exemple connectée, au noeud d'entrée EA du commutateur 611. La résistance r23 a une première extrémité reliée, par exemple connectée, au noeud EA, et une deuxième extrémité reliée, par exemple connectée, au noeud de référence GND.

Dans l'exemple de la figure 6, le circuit 601 comprend en outre un convertisseur numérique-analogique 613 (DAC), adapté à convertir un signal de consigne numérique CN fourni par un microcontrôleur (non représenté), en une tension analogique continue V2 appliquée sur l'entrée EB du commutateur 611.

Les noeuds de sortie SA et SB sont tous les deux reliés, par exemple connectés, à un noeud de fourniture du signal VTH (relié, par exemple connecté, à l'entrée inverseuse (-) de l'amplificateur opérationnel A01 dans l'exemple de la figure 4).

Le fonctionnement du commutateur analogique 611 est le suivant. Lorsqu'un signal de contrôle de niveau haut est appliqué sur le noeud de contrôle cA du commutateur, la tension V1 appliquée sur l'entrée EA du commutateur est reportée sur sa sortie SA. Ainsi, la tension VTH prend la valeur V1. Lorsqu'un signal de contrôle de niveau haut est appliqué sur le noeud de contrôle cB du commutateur, la tension V2 appliquée sur l'entrée EB du commutateur est reportée sur sa sortie SB. Ainsi, la tension VTH prend la valeur V2.

Dans cet exemple, le circuit 601 comprend un circuit de génération des signaux de commande cA et cB comprenant une porte logique NON ET NAND3 montée en porte inverseuse pour la commande cA, le signal direct étant appliqué à la commande cB. Plus particulièrement, dans cet exemple, la porte NAND3 a des premier et deuxième noeuds d'entrée reliés, par exemple connectés, au noeud cB, et un noeud de sortie relié, par exemple connecté, au noeud cA.

Dans cet exemple, les noeuds d'entrée de la porte NAND3 sont reliés, par exemple connectés, au noeud de sortie de l'amplificateur opérationnel AO1 du circuit de comparaison 307 (fournissant le signal OUT). Ainsi, lorsque le signal OUT est à l'état bas (0 logique), la porte NAND3 met sa sortie à l'état haut (1 logique) permettant au circuit 611 de présenter le niveau V1 à l'entrée VTH de l'amplificateur opérationnel AO1. Les signaux de commande appliqués sur le noeuds de commande cA et cB du commutateur 611 sont alors respectivement à l'état haut et à l'état bas. Le seuil VTH correspond alors à la valeur de tension V1, générée par le point diviseur de tension formé par les résistances r22 et r23. Lorsque le signal OUT passe à l'état haut, la porte NAND3 met sa sortie à l'état bas (0) sur l'entrée cA, le signal direct sur l'entrée cB étant à l'état haut (1). Les signaux de commande appliqués sur le noeuds de commande cA et cB du commutateur 611 sont alors respectivement à l'état bas et à l'état haut. Le seuil VTH correspond alors à la valeur de tension V2, définie par le microcontrôleur (non représenté). La valeur V2 est par exemple inférieure à la valeur V1, ce qui permet d'obtenir un hystérésis. Le circuit 611 pourra par ailleurs être adapté pour définir plusieurs seuils de comparaison de puissance pour respectivement plusieurs modes de fonctionnement différents du véhicule.

Un avantage des modes de réalisation décrits ci-dessus est que le convertisseur de puissance 105 couplé au panneau photovoltaïque 101 est activé uniquement lorsque le module d'auto-activation 107 détecte que la puissance maximale productible par le panneau photovoltaïque est supérieure à un seuil correspondant à la surconsommation du système liée à l'activation de l'alimentation solaire.

On notera que de façon avantageuse, les circuits de mesure de puissance maximale productible du module d'auto-activation 107 peuvent se substituer à des circuits périphériques de mesure de puissance placés en aval du convertisseur 105.

Par ailleurs, la fréquence de répétition de l'extraction de la puissance maximale productible MPP peut être adaptée au mode d'utilisation du véhicule, par exemple adaptée en fonction de la vitesse du véhicule.

La fonction de tracé de la caractéristique I_{PV}(V_{PV}) mise en oeuvre par le module d'auto-activation 107 peut en outre avantageusement être exploitée pour mettre en oeuvre des fonctions de diagnostic du panneau photovoltaïque (détection de salissures, défaillances, vieillissement, etc.), ou de détection d'ombrages partiels.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les modes de réalisation décrits ne se limitent pas à l'exemple particulier décrit en relation avec les figures 3, 4, 5 et 6, de réalisation du module d'auto-activation 107. D'autres implémentations d'un circuit 107 adapté à mettre en oeuvre le fonctionnement décrit en relation avec les figures 1 et 2 peuvent être prévues. En particulier, bien qu'un exemple d'implémentation analogique ait été décrit en relation avec les figures 4, 5 et 6, d'autres implémentations, analogique et/ou numérique, peuvent être prévues.

En outre, les modes de réalisation décrits ne se limitent pas à l'exemple susmentionné d'application à un véhicule automobile à motorisation électrique muni d'un toit solaire. Plus généralement, les modes de réalisation décrits peuvent être appliqués à tout système comportant un ou plusieurs panneaux photovoltaïques pour l'alimentation électrique d'une charge, par exemple une batterie électrique. A titre d'exemple, les modes de réalisation décrits peuvent être appliqués à d'autres types de véhicules, par exemple des bateaux, ou à des robots autonomes, ou à des installations autonomes de type radar automobile ou des installations autonomes d'émission-réception d'ondes radio.

Enfin, la mise en oeuvre pratique des modes de réalisation et variantes décrits est à la portée de la personne du métier à partir des indications fonctionnelles données ci-dessus.

## Revendications

1. Système comportant un panneau photovoltaïque (101), et un convertisseur de puissance (105) adapté à convertir une puissance électrique de sortie du panneau photovoltaïque en une puissance électrique d'alimentation d'une charge (103), le système comportant en outre un module d'auto-activation (107) configuré pour, avant d'activer le convertisseur de puissance (105), mettre en oeuvre les étapes successives suivantes :
a) mesurer la puissance électrique maximale (MPP) pouvant être produite par le panneau photovoltaïque (101) ;
b) comparer ladite puissance électrique maximale (MPP) à un premier seuil de puissance (TH2) ; et
c) activer le convertisseur de puissance (105) pour alimenter la charge (103) uniquement si ladite puissance électrique maximale (MPP) est supérieure audit premier seuil de puissance (TH2).

2. Système selon la revendication 1, dans lequel le module d'auto-activaton (107) est configuré pour réitérer périodiquement les étapes a) et b) tant que ladite puissance électrique maximale (MPP) est inférieure audit premier seuil de puissance (TH2).

3. Système selon la revendication 1 ou 2, dans lequel le premier seuil de puissance (TH2) est supérieur ou égal à une valeur de surconsommation du système en cas d'activation du convertisseur de puissance (105) pour alimenter la charge (103).

4. Système selon l'une quelconque des revendications 1 à 3, dans lequel le module d'auto-activation (107) est configuré pour mesurer la tension (V_{PV}) aux bornes du panneau photovoltaïque (101) et mettre en oeuvre les étapes a) et b) uniquement lorsque ladite tension (V_{PV}) est supérieure à un seuil de tension (TH1) prédéfini

5. Système selon l'une quelconque des revendications 1 à 4, dans lequel le module d'auto-activation (107) est en outre configuré pour, après l'étape c), mesurer périodiquement la puissance électrique maximale (MPP) pouvant être produite par le panneau photovoltaïque (101), et interrompre le convertisseur de puissance (105) lorsque ladite puissance électrique maximale (MPP) retombe sous un deuxième seuil de puissance (TH3).

6. Système selon la revendication 5, dans lequel le deuxième seuil de puissance (TH3) est inférieur au premier seuil de puissance (TH2).

7. Système selon l'une quelconque des revendications 1 à 6, dans lequel le premier seuil de puissance (TH2) est modifiable pour prendre l'une ou l'autre de deux valeurs prédéfinies en fonction d'un mode d'utilisation du système.

8. Système selon l'une quelconque des revendications 1 à 7, dans lequel la charge (103) à alimenter est une batterie d'un véhicule, et dans lequel le panneau photovoltaïque (101) est monté sur le véhicule.

9. Système selon l'une quelconque des revendications 1 à 8, dans lequel le module d'auto-activation (107) comprend un circuit (301) de mesure d'une caractéristique courant-tension (I_{PV}(V_{PV})) du panneau photovoltaïque (101).

10. Système selon la revendication 9, dans lequel le module d'auto-activation (107) comprend en outre un multiplieur (303) fournissant un signal (PP) représentatif du produit du courant (I_{PV}) et de la tension (V_{PV}) du panneau photovoltaïque (101).

11. Système selon la revendication 10, dans lequel le module d'auto-activation (107) comprend en outre un détecteur (305) d'une valeur maximale (MPP) dudit signal (PP) représentatif du produit du courant (I_{PV}) et de la tension (V_{PV}) du panneau photovoltaïque (101).

12. Système selon la revendication 11, dans lequel le module d'auto-activation (107) comprend en outre un circuit (307) de comparaison de ladite valeur maximale (MPP) dudit signal (PP) représentatif du produit du courant (I_{PV}) et de la tension (V_{PV}) du panneau photovoltaïque (101) à un seuil (VTH).

13. Procédé de commande d'un système comportant un panneau photovoltaïque (101), et un convertisseur de puissance (105) adapté à convertir une puissance électrique de sortie du panneau photovoltaïque en une puissance électrique d'alimentation d'une charge (103), comprenant, avant d'activer le convertisseur de puissance (105), les étapes successives suivantes :
a) mesurer la puissance électrique maximale (MPP) pouvant être produite par le panneau photovoltaïque (101) ;
b) comparer ladite puissance électrique maximale (MPP) à un premier seuil de puissance (TH2) ; et
c) activer le convertisseur de puissance (105) pour alimenter la charge (103) uniquement si ladite puissance électrique maximale (MPP) est supérieure audit premier seuil de puissance (TH2).

## Patentansprüche

1. System, das ein Photovoltaikpanel (101) und einen Leistungswandler (105) aufweist, der eingerichtet ist zum Umwandeln einer elektrischen Ausgangsleistung des Photovoltaikpanels in eine elektrische Versorgungsleistung für eine Last (103), wobei das System ferner ein Selbstaktivierungsmodul (107) aufweist, das eingerichtet ist, vor dem Aktivieren des Leistungswandlers (105), zum Ausführen der folge nden aufeinanderfolgenden Schritte:
a) Messen der maximalen elektrischen Leistung (MPP), die von dem Photovoltaikpanel (101) erzeugt werden kann;
b) Vergleichen der maximalen elektrischen Leistung (MPP) mit einem ersten Leistungsschwellenwert (TH2); und
c) Aktivieren des Leistungswandlers (105) zum Versorgen der Last (103) nur dann, wenn die maximale elektrische Leistung (MPP) größer als der erste Leistungsschwellenwert (TH2) ist.

2. System nach Anspruch 1, wobei das Selbstaktivierungsmodul (107) eingerichtet ist zum periodischen Wiederholen der Schritte a) und b), solange die maximale elektrische Leistung (MPP) kleiner als der erste Leistungsschwellenwert (TH2) ist.

3. System nach Anspruch 1 oder 2, wobei der erste Leistungsschwellenwert (TH2) größer als oder gleich einem Überverbrauchswert des Systems in dem Fall ist, in dem der Leistungswandler (105) aktiviert ist zum Versorgen der Last (103).

4. System nach einem der Ansprüche 1 bis 3, wobei das Selbstaktivierungsmodul (107) eingerichtet ist zum Messen der Spannung (V_{PV}) über dem Photovoltaikpanel (101) und zum Ausführen der Schritte a) und b) nur dann, wenn die Spannung (V_{PV}) größer als ein vordefinierter Spannungsschwellenwert (TH1) ist.

5. System nach einem der Ansprüche 1 bis 4, wobei das Selbstaktivierungsmodul (107) ferner eingerichtet ist, nach Schritt c), zum periodischen Messen der maximalen elektrischen Leistung (MPP), die von dem Photovoltaikpanel (101) erzeugt werden kann, und zum Unterbrechen des Leistungswandlers (105), wenn die maximale elektrische Leistung (MPP) unter einen zweiten Leistungsschwellenwert (TH3) fällt.

6. System nach Anspruch 5, wobei der zweite Leistungsschwellenwert (TH3) niedriger als der erste Leistungsschwellenwert (TH2) ist.

7. System nach einem der Ansprüche 1 bis 6, wobei der erste Leistungsschwellenwert (TH2) veränderbar ist, um in Abhängigkeit von einem Verwendungsmodus des Systems einen von zwei vordefinierten Werten anzunehmen.

8. System nach einem der Ansprüche 1 bis 7, wobei die zu versorgende Last (103) eine Fahrzeugbatterie ist und wobei das Photovoltaikpanel (101) an dem Fahrzeug montiert ist.

9. System nach einem der Ansprüche 1 bis 8, wobei das Selbstaktivierungsmodul (107) eine Schaltung (301) zum Messen einer Strom-Spannungs-Kennlinie (I_{PV}(V_{PV})) des Photovoltaikpanels (101) aufweist.

10. System nach Anspruch 9, wobei das Selbstaktivierungsmodul (107) ferner einen Multiplizierer (303) aufweist, der ein Signal (PP) bereitstellt, das das Produkt des Stroms (I_{PV}) und der Spannung (V_{PV}) des Photovoltaikpanels (101) darstellt.

11. System nach Anspruch 10, wobei das Selbstaktivierungsmodul (107) ferner einen Detektor (305) eines Maximalwerts (MPP) des Signals (PP) aufweist, das das Produkt des Stroms (I_{PV}) und der Spannung (V_{PV}) des Photovoltaikpanels (101) darstellt.

12. System nach Anspruch 11, wobei das Selbstaktivierungsmodul (107) ferner eine Schaltung (307) zum Vergleichen des Maximalwerts (MPP) des Signals (PP), das das Produkt des Stroms (I_{PV}) und der Spannung (V_{PV}) des Photovoltaikpanels (101) darstellt, mit einem Schwellenwert (VTH) aufweist.

13. Verfahren zum Steuern eines Systems, das ein Photovoltaikpanel (101) und einen Leistungswandler (105) aufweist, der eingerichtet ist zum Umwandeln einer elektrischen Ausgangsleistung des Photovoltaikpanels in eine elektrische Versorgungsleistung für eine Last (103), wobei das Verfahren vor dem Aktivieren des Leistungswandlers (105) die folgenden aufeinanderfolgenden Schritte aufweist:
a) Messen der maximalen elektrischen Leistung (MPP), die von dem Photovoltaikpanel (101) erzeugt werden kann;
b) Vergleichen der maximalen elektrischen Leistung (MPP) mit einem ersten Leistungsschwellenwert (TH2); und
c) Aktivieren des Leistungswandlers (105) zum Versorgen der Last (103) nur dann, wenn die maximale elektrische Leistung (MPP) größer als der erste Leistungsschwellenwert (TH2) ist.

## Claims

1. System including a photovoltaic panel (101), and a power converter (105) adapted to convert an electrical output power from the photovoltaic panel into an electrical supply power for a load (103), the system further including a self-activation module (107) configured to, before activating the power converter (105), implement the following consecutive steps:
a) measuring the maximum electrical power (MPP) that can be produced by the photovoltaic panel (101);
b) comparing said maximum electrical power (MPP) to a first power threshold (TH2); and
c) activating the power converter (105) to supply the load (103) only if said maximum electrical power (MPP) is greater than said first power threshold (TH2).

2. System according to claim 1, wherein the self-activation module (107) is configured to periodically repeat steps a) and b) as long as said maximum electrical power (MPP) is less than said first power threshold (TH2).

3. System according to claim 1 or 2, wherein the first power threshold (TH2) is greater than or equal to an overconsumption value of the system in the case where the power converter (105) is activated to supply the load (103).

4. System according to any one of claims 1 to 3, wherein the self-activation module (107) is configured to measure the voltage (V_{PV}) across the photovoltaic panel (101) and to implement steps a) and b) only when said voltage (V_{PV}) is greater than a predefined voltage threshold (TH1).

5. System according to any one of claims 1 to 4, wherein the self-activation module (107) is further configured to, after step c), periodically measure the maximum electrical power (MPP) that can be produced by the photovoltaic panel (101), and interrupt the power converter (105) when said maximum electrical power (MPP) falls below a second power threshold (TH3).

6. System according to claim 5, wherein the second power threshold (TH3) is lower than the first power threshold (TH2).

7. System according to any one of claims 1 to 6, wherein the first power threshold (TH2) is modifiable to take either of two predefined values depending on a mode of use of the system.

8. System according to any one of claims 1 to 7, wherein the load (103) to be supplied is a vehicle battery, and wherein the photovoltaic panel (101) is mounted on the vehicle.

9. System according to any one of claims 1 to 8, wherein the self-activation module (107) comprises a circuit (301) for measuring a current-voltage characteristic (I_{PV}(V_{PV})) of the photovoltaic panel (101).

10. System according to claim 9, wherein the self-activation module (107) further comprises a multiplier (303) providing a signal (PP) representing the product of the current (I_{PV}) and the voltage (V_{PV}) of the photovoltaic panel (101).

11. System according to claim 10, wherein the self-activation module (107) further comprises a detector (305) of a maximum value (MPP) of said signal (PP) representing the product of the current (I_{PV}) and the voltage (V_{PV}) of the photovoltaic panel (101).

12. System according to claim 11, wherein the self-activation module (107) further comprises a circuit (307) for comparing said maximum value (MPP) of said signal (PP) representing the product of the current (I_{PV}) and the voltage (V_{PV}) of the photovoltaic panel (101) to a threshold (VTH).

13. Method for controlling a system including a photovoltaic panel (101), and a power converter (105) adapted to convert an electrical output power from the photovoltaic panel into an electrical supply power for a load (103), comprising, before activating the power converter (105), the following consecutive steps:
a) measuring the maximum electrical power (MPP) that can be produced by the photovoltaic panel (101);
b) comparing said maximum electrical power (MPP) to a first power threshold (TH2); and
c) activating the power converter (105) to supply the load (103) only if said maximum electrical power (MPP) is greater than said first power threshold (TH2).
